# EUROPEAN PATENT SPECIFICATION

(11) **EP 3 785 939 B1**
(45) Date of publication and mention of the grant of the patent: **09.03.2022**
(21) Application number: 20190382.0
(22) Date of filing: 11.08.2020
(51) Int. Cl.: B60C 11/03, B60C 11/12

(54) **TYRE**
REIFEN
PNEUMATIQUE

(30) Priority: 30.08.2019 JP 2019157537
(43) Date of publication of application: 03.03.2021
(73) Proprietor: SUMITOMO RUBBER INDUSTRIES, LTD., Chuo-ku, Kobe-shi, Hyogo 651-0072 (JP)
(72) Inventor: KUNKEL, Daniel, Kobe-shi, Hyogo 651-0072 (JP); LEENDERTSE, Jaap, Kobe-shi, Hyogo 651-0072 (JP); SAWAKAMI, Isao, Kobe-shi, Hyogo 651-0072 (JP)
(74) Representative: Manitz Finsterwald Patent- und Rechtsanwaltspartnerschaft mbB

(56) References cited:
- EP-A1- 3 269 565
- EP-A1- 3 375 634
- EP-A1- 3 489 037
- US-A1- 2018 178 589

## Description

### Technical Field

The present invention relates to a tyre, and more specifically, to a tyre having a tread portion whose position when mounted on a vehicle is specified.

### Background Art

For example, Patent Literature 1 below has proposed a tyre having a tread portion whose position when mounted on a vehicle is specified.
In this tyre, the sum of the widths of the shoulder main grooves and the width of the center main groove is specified.

### Prior Art Document

Patent Literature 1: Japanese Unexamined Patent Application Publication No. 2015-140047

A tyre in accordance with the preamble of claim 1 is known from EP 3 489 037 A1. Related tyres are known from EP 3 269 565 A, EP 3 375 634 A1 and US 2018/178589 A1.

### Summary of the Invention

### Problems to be Solved by the Invention

In a tyre having a tread portion whose position when mounted on a vehicle is specified, there has been a demand for further improvement of steering stability and wet performance on a dry road surface.

The present invention was made in view of the above, and a primary object thereof is to provide a tyre, which has a tread portion whose position when mounted on a vehicle is specified, capable of exerting excellent wet performance while maintaining the steering stability on a dry road surface and having an improved noise performance.

### Means for solving the Problem

In one aspect of the present invention, a tyre includes a tread portion whose position when mounted on a vehicle is specified, wherein the tread portion includes a plurality of main grooves extending continuously in a tyre circumferential direction, and land regions divided by the main grooves, the land regions including a first land region and a second land region positioned adjacently to the first land region, when the tyre is mounted on a vehicle, on an inner side of the vehicle, the first land region is provided with a plurality of first sipes each crossing the first land region, the second land region includes a first vertical edge positioned on a side of the first land region, a second vertical edge positioned on a side opposite to the first vertical edge, and a ground contacting surface defined between the first vertical edge and the second vertical edge, the second land region is provided with a plurality of second sipes each extending from the first vertical edge to terminate without reaching the second vertical edge, and a plurality of third sipes each extending from the second vertical edge to terminate without reaching the first vertical edge, and each of the first sipes includes a first shallow bottom portion formed by raising a bottom surface thereof at a center portion thereof in a tyre axial direction.

In another aspect of the invention, it is preferred that the number of the main grooves is three and the tread portion comprises four land regions divided by the three main grooves, and the first land region and the second land region are sandwiched between the other two land regions.

In another aspect of the invention, it is preferred that each of the first sipes extends linearly and obliquely with respect to the tyre axial direction.

In another aspect of the invention, it is preferred that each of the second sipes includes a second shallow bottom portion formed by raising a bottom surface thereof.

In another aspect of the invention, it is preferred that the second shallow bottom portion is provided at a position including an end portion on a side of the second vertical edge of a respective one of the second sipes.

In another aspect of the invention, it is preferred that the second shallow bottom portion includes a constant depth portion extending in a longitudinal direction of a respective one of the second sipes at a constant depth.

In another aspect of the invention, it is preferred that a difference between the depth of the constant depth portion of the second shallow bottom portion and a maximum depth of a respective one of the second sipes is 0.5 mm or more.

In another aspect of the invention, it is preferred that each of the third sipes includes a third shallow bottom portion formed by raising a bottom surface thereof.

In another aspect of the invention, it is preferred that the third shallow bottom portion is provided at a position including an end portion on a side of the first vertical edge of a respective one of the third sipes.

In another aspect of the invention, it is preferred that the third shallow bottom portion includes a constant depth portion extending in a longitudinal direction of a respective one of the third sipes at a constant depth.

In another aspect of the invention, it is preferred that a difference between the depth of the constant depth portion of the third shallow bottom portion and a maximum depth of a respective one of the third sipes is 0.5 mm or more.

In the inventive tyre, the first sipes, the second sipes, and the third sipes are inclined in the same direction with respect to the tyre axial direction.

In the inventive tyre, each of the second sipes includes a gently inclined portion inclined at an angle smaller than each of the first sipes with respect to the tyre axial direction and a steeply inclined portion inclined at an angle larger than each of the first sipes with respect to the tyre axial direction.

In another aspect of the invention, it is preferred that each of the third sipes includes a gently inclined portion inclined at an angle smaller than each of the first sipes with respect to the tyre axial direction and a steeply inclined portion inclined at an angle larger than each of the first sipes with respect to the tyre axial direction.

In another aspect of the invention, it is preferred that the gently inclined portion extends linearly.

In another aspect of the invention, it is preferred that the steeply inclined portion extends linearly.

In another aspect of the invention, it is preferred that the gently inclined portion of each of the second sipes is connected with the first vertical edge.

In another aspect of the invention, it is preferred that the gently inclined portion of each of the third sipes is connected with the second vertical edge.

In another aspect of the invention, it is preferred that each of the second sipes includes a second shallow bottom portion formed by raising a bottom surface thereof, and the second shallow bottom portion is provided at the steeply inclined portion thereof.

In another aspect of the invention, it is preferred that each of the third sipes includes a third shallow bottom portion formed by raising a bottom surface thereof, and the third shallow bottom portion is provided at the steeply inclined portion thereof.

### Advantageous Effects of the Invention

The tread portion of the tyre according to the present invention includes the first land region divided by the main grooves and the second land region positioned adjacently to the first land region, when mounted on a vehicle, on an inner side of the vehicle. The first land region is provided with a plurality of the first sipes each crossing the first land region. Although, ground contact pressure tends to be increased during cornering, it is possible that the sipes provided in the first land region provide an optimum of block rigidity for improved dry braking performance and improved cornering behavior.

The second land region is positioned adjacently to the first land region on the inner side of the vehicle, therefore, larger ground contact pressure tends to be applied to the second land region than the first land region during running straight. Thereby, in order to maintain the steering stability on a dry road surface, it is preferred that rigidity decrease of the second land region is suppressed. The second land region of this invention is provided with a plurality of the second sipes each extending from the first vertical edge to terminate without reaching the second vertical edge, and a plurality of the third sipes each extending from the second vertical edge to terminate without reaching the first vertical edge. It is possible that the sipes provided in the second land region provide large frictional force by edges thereof even on a wet road surface, therefore, it is possible that the wet performance is improved. Although large ground contact pressure is applied to the second land region, the second sipes and the third sipes configured as such suppress excessive decrease in the rigidity of the second land region while providing frictional force on a wet road surface, therefore, they are helpful for maintaining the steering stability on a dry road surface.

In the tyre according to the present disclosure, each of the first sipes includes the first shallow bottom portion formed by raising the bottom surface thereof at the center portion thereof in the tyre axial direction. The first sipes configured as such suppress excessive decrease in the rigidity of the first land region without impairing the edge effect described above, therefore, it is possible that the steering stability on a dry road surface is maintained more reliably.

### Brief Description of the Drawings

Fig. 1 is a development view of a tread portion according to an embodiment of the present invention.
Fig. 2 is an enlarged view of a first land region and a second land region of Fig. 1.
Fig. 3 is a cross-sectional view taken along A-A line of Fig. 2.
Fig. 4 is a cross-sectional view taken along B-B line of Fig. 2.
Fig. 5 is a cross-sectional view taken along C-C line of Fig. 2.
Fig. 6 is a cross-sectional view taken along D-D line of Fig. 2.
Fig. 7 is an enlarged view of a third land region of Fig. 1.
Fig. 8 is an enlarged view of a fourth land region of Fig. 1.
Fig. 9 is a development view of the tread portion of a tyre as Reference.

### Description of the Preferred Embodiment

An embodiment of the present invention will now be described in conjunction with accompanying drawings.

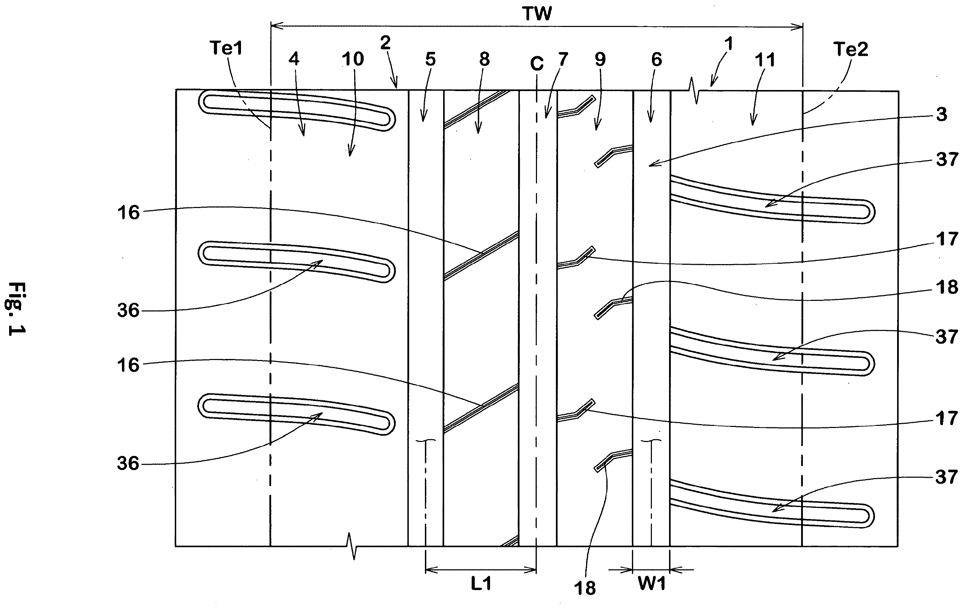

Fig. 1 is a development view of a tread portion 2 of a tyre 1 showing an embodiment of the present invention. The tyre 1 in this embodiment is suitably used as a pneumatic tyre for a passenger car, for example. However, the present invention is not limited to such an embodiment.

As shown in Fig. 1, the tyre 1 according to this embodiment has the tread portion 2 whose position when mounted on a vehicle is specified. The tread portion 2 includes a first tread edge (Te1) positioned, when mounted on a vehicle, on an outer side of the vehicle and a second tread edge (Te2) positioned on an inner side of the vehicle. The mounting position of the tyre 1 on a vehicle is indicated by a letter or a symbol on at least one of sidewall portions (not shown), for example.

In a case of a pneumatic tyre, the first tread edge (Te1) and the second tread edge (Te2) are defined as outermost ground contacting positions in a tyre axial direction when the tyre 1 in a standard state is in contact with a flat surface with zero camber angle by being loaded with a standard tyre load. The standard state is a state in which the tyre is mounted on a standard rim, inflated to a standard inner pressure, and loaded with no tyre load. In this specification, unless otherwise noted, dimensions and the like of various parts of the tyre are values measured in the standard state.

The "standard rim" is a wheel rim specified for the concerned tyre by a standard included in a standardization system on which the tyre is based, for example, the "normal wheel rim" in JATMA, "Design Rim" in TRA, and "Measuring Rim" in ETRTO.

The "standard inner pressure" is air pressure specified for the concerned tyre by a standard included in a standardization system on which the tyre is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

The "standard tyre load" is a tyre load specified for the concerned tyre by a standard included in a standardization system on which the tyre is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

The tread portion 2 includes a plurality of main grooves 3 continuously extending in a tyre circumferential direction between the first tread edge (Te1) and the second tread edge (Te2), and a plurality of land regions 4 divided by the main grooves 3.

The main grooves 3 includes a first shoulder main groove 5 arranged between the first tread edge (Te1) and a tyre equator (c), and a second shoulder main groove 6 arranged between the second tread edge (Te2) and the tyre equator (c). and one crown main groove 7 arranged between the first shoulder main groove 5 and the second shoulder main groove 6.

It is preferred that a distance (L1) in the tyre axial direction between the tyre equator (c) and a groove center line of the first shoulder main groove 5 or the second shoulder main groove 6 is 0.15 times or more a tread width (TW) and 0.30 times or less the tread width (TW), for example. The tread width (TW) is a distance in the tyre axial direction between the first tread edge (Te1) and the second tread edge (Te2) of the tyre 1 in the standard state.

The crown main groove 7 is arranged on the tyre equator (c), for example. However, it is not limited to such an embodiment.

Each of the main grooves 3 in this embodiment extends linearly in parallel with the tyre circumferential direction, for example. Each of the main grooves 3 may extend in a wavy manner, for example.

It is preferred that a groove width (W1) of each of the main grooves 3 is 5% or more and 8% or less of the tread width (TW), for example. In the case of a pneumatic tyre for a passenger car, it is preferred that a depth of each of the main grooves 3 is 5 mm or more and 10 mm or less, for example.

The tread portion 2 in this embodiment is composed of four land regions 4 divided by the three main grooves 3 described above. However, it is not limited to such an embodiment, but the tread portion 2 may be composed of five land regions 4 divided by four main grooves 3, for example.

The land regions 4 include a first land region 8 and a second land region 9. The land regions 4 in this embodiment further include a third land region 10 and a fourth land region 11. The first land region 8 in this embodiment is defined between the first shoulder main groove 5 and the crown main groove 7, for example. When the tyre 1 is mounted on a vehicle, the second land region 9 is positioned adjacently to the first land region 8 on the inner side of the vehicle. The second land region 9 in this embodiment is defined between the second shoulder main groove 6 and the crown main groove 7. The third land region 10 is defined between the first tread edge (Te1) and the first shoulder main groove 5. The fourth land region 11 is defined between the second tread edge (Te2) and the second shoulder main groove 6. The first land region 8 and the second land region 9 are sandwiched by the other two land regions (the third land region 10 and the fourth land region 11).

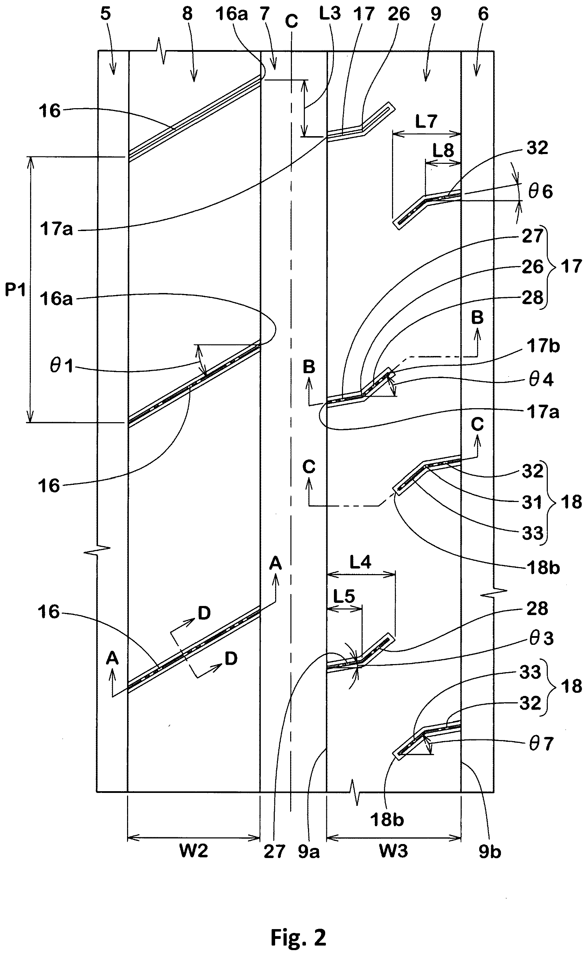

Fig. 2 is an enlarged view of the first land region 8 and the second land region 9. As shown in Fig. 2, each of a width (W2) in the tyre axial direction of the first land region 8 and a width (W3) in the tyre axial direction of the second land region 9 is 0.10 times or more and 0.20 times or less the tread width (TW) (shown in Fig. 1 and the same applies hereinafter), for example. In this embodiment, the width (W2) of the first land region 8 and the width (W3) of the second land region 9 are set to be equal. However, the present invention is not limited to such an embodiment.

The first land region 8 is provided with a plurality of first sipes 16 each extends so as to cross the first land region 8 at the outer side of the vehicle. Although, in the first land region 8, ground contact pressure tends to be increased during cornering, it is possible that the first sipes 16 provide an optimum of block rigidity for improved dry braking performance and improved cornering behavior.

The second land region 9 includes a first vertical edge (9a) positioned on a side of the first land region 8, a second vertical edge (9b) positioned on an opposite side to the first vertical edge (9a), and a ground contacting surface defined between the first vertical edge (9a) and the second vertical edge (9b).

The second land region 9 is adjacent to the first land region 8 on the inner side of the vehicle, therefore, larger ground contact pressure tends to be applied to the second land region 9 than the first land region 8 during running straight. Thereby, it is preferred that the rigidity of the second land region is suppressed from decreasing in order to maintain the steering stability on a dry road surface. The second land region 9 in this embodiment is provided with a plurality of second sipes 17 each extending from the first vertical edge (9a) to terminate to have a closed terminating end without reaching the second vertical edge (9b) and a plurality of third sipes 18 each extending from the second vertical edge (9b) to terminate to have a closed terminating end without reaching the first vertical edge (9a). Although large ground contact pressure is applied to the second land region 9, the second sipes 17 and the third sipes 18 configured as such, while providing frictional force on a wet road surface, suppress excessive rigidity decrease of the second land region 9, therefore, they are helpful for maintaining the steering stability on a dry road surface.

In this specification, the "sipe" is an incision whose opening width at the ground contacting surface is 2.0 mm or less, and is distinguished from a groove for drainage. The maximum depth of each of the sipes is 0.50 times or more and 0.70 times or less the depth of each of the main grooves 3, for example.

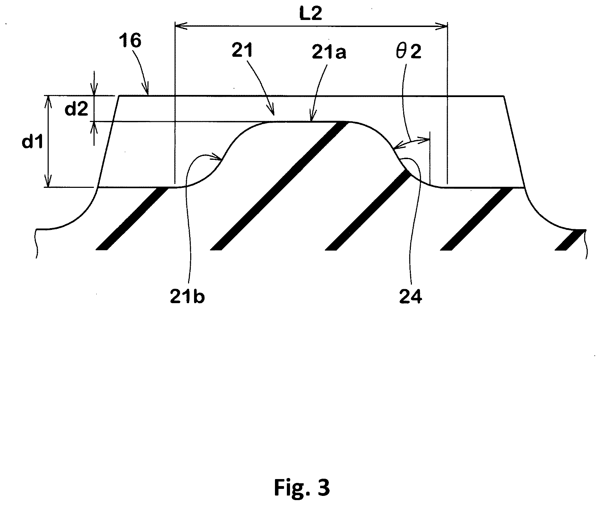

Fig. 3 is a cross-sectional view of one of the first sipes 16 taken along A-A line of Fig. 2. As shown in Fig. 3, each of the first sipes 16 includes, in a center portion thereof in the tyre axial direction, a first shallow bottom portion 21 formed by raising a bottom surface of the sipe. The first sipes 16 configured as such suppress the first land region 8 from excessively decreasing in the rigidity without impairing the edge effects described above, therefore, it is possible that the steering stability on a dry road surface is maintained more reliably.

A length (L2) in the tyre axial direction of the first shallow bottom portion 21 is 0.55 times or more and 0.75 times or less of the width (W2) (shown in Fig. 2) in the tyre axial direction of the first land region 8, for example. The first shallow bottom portion 21 configured as such are helpful for improving the steering stability on a dry road surface and the wet performance in a good balance.

The first shallow bottom portion 21 in this embodiment includes a constant depth portion (21a) having a constant depth in a longitudinal direction of the first sipe and varying depth portions (21b) arranged on both sides of the constant depth portion (21a). The depth of each of the varying depth portions (21b) varies as it goes along the longitudinal direction of the first sipe 16. Each of the varying depth portions (21b) includes a side surface 24 inclined with respect to a tyre radial direction. An angle θ2 of the side surface 24 with respect to the tyre radial direction is 25 degrees or more and 35 degrees or less, for example.

It is preferred that a depth (d2) of the constant depth portion (21a) is 0.50 times or less a maximum depth (d1) of the first sipe 16, for example. Specifically, it is preferred that the depth (d2) of the constant depth portion (21a) is 0.20 times or more and 0.40 times or less the maximum depth (d1) of the first sipe 16, for example. The first shallow bottom portions 21 configured as such effectively increase the rigidity of the first land region 8 while ensuring the wet performance.

As shown in Fig. 2, each of the first sipes 16 extends linearly and obliquely with respect to the tyre axial direction, for example. An angle θ1 with respect to the tyre axial direction of each of the first sipes 16 in this embodiment is 25 degrees or more and 35 degrees or less, for example. The first sipes 16 configured as such can provide frictional force also in the tyre axial direction on a wet road surface.

The first sipes 16, the second sipes 17, and the third sipes 18 are inclined in the same direction with respect to the tyre axial direction. Further, the first sipes 16, the second sipes 17, and the third sipes 18 are arranged in the tyre circumferential direction at the substantially equal pitch. such an arrangement of the sipes is helpful for suppressing uneven wear of the first land region 8 and the second land region 9.

From the similar point of view, it is preferred that an end portion (17a) on a side of the first land region 8 of each of the second sipes 17 is misaligned in the tyre circumferential direction with an end portion (16a) on a side of the second land region 9 of one of the first sipes 16 adjacent to a respective one of the second sipes 17. A distance (L3) in the tyre circumferential direction between the end portion (17a) of each of the second sipes 17 and the end portion (16a) of one of the first sipes 16 adjacent to a respective one of the second sipes 17 is 0.15 times or more and 0.30 times or less a pitch length (P1) in the tyre circumferential direction of the first sipes 16, for example.

A length (L4) in the tyre axial direction of each of the second sipes 17 is 0.40 times or more and 0.60 times or less the width (W3) in the tyre axial direction of the second land region 9, for example.

The second sipes 17 may be curved or partially bent, for example. Each of the second sipes 17 in this embodiment has a bent portion 26, for example. A distance (L5) in the tyre axial direction between the first vertical edge (9a) and each of the bent portions 26 is 0.40 times or more and 0.60 times or less the length (L4) in the tyre axial direction of each of the second sipes 17, for example. The second sipes 17 configured as such provide frictional force in multiple directions by the edges thereof, therefore, they are helpful for improving traction and cornering performance during running on a wet road surface.

Each of the second sipes 17 includes a gently inclined portion 27 inclined with respect to the tyre axial direction and a steeply inclined portion 28 inclined at a larger angle than the gently inclined portion 27 with respect to the tyre axial direction. The gently inclined portion 27 is connected with the first vertical edge (9a). An angle θ3 of the gently inclined portion 27 with respect to the tyre axial direction is 5 degrees or more and 15 degrees or less, for example. The steeply inclined portion 28 includes an end portion (17b) on a side of the second vertical edge (9b) of a respective one of the second sipes 17. An angle θ4 of the steeply inclined portion 28 with respect to the tyre axial direction is 40 degrees or more and 50 degrees or less, for example. It is preferred that each of the gently inclined portions 27 and the steeply inclined portions 28 extends linearly.

The angle θ3 of each of the gently inclined portions 27 is smaller than the angle θ1 of each of the first sipes 16 with respect to the tyre axial direction. The angle θ4 of each of the steeply inclined portions 28 is larger than the angle θ1 of each of the first sipes 16. Thereby, impact sound generated when the edges of the first sipes 16 and the edges of the second sipes 17 come into contact with ground is turned into white noise, therefore, noise performance is improved.

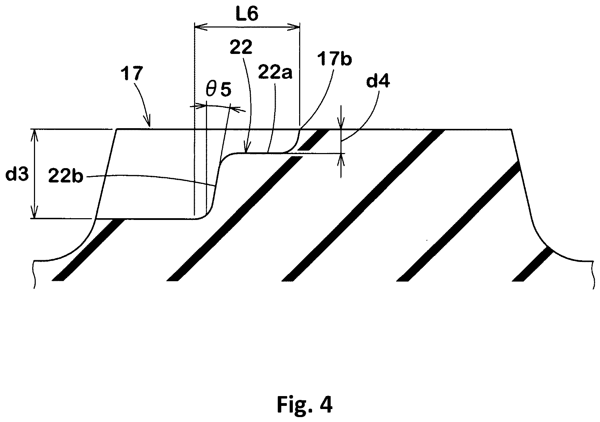

Fig. 4 is a cross-sectional view of one of the second sipes 17 taken along B-B line of Fig. 2. As shown in Fig. 4, each of the second sipes 17 includes a second shallow bottom portion 22 formed by raising a bottom surface of the respective second sipe. The second shallow bottom portion 22 in this embodiment includes the end portion (17b) on a side of the second vertical edge (9b) of the respective second sipe 17. The second sipes 17 configured as such maintain the rigidity of the second land region 9, therefore, the steering stability on a dry road surface is ensured.

It is preferred that the second shallow bottom portion 22 is provided in the steeply inclined portion 28 (shown in Fig. 2). Thereby, the rigidity in the tyre axial direction of the second land region 9 is effectively maintained.

A length (L6) in the tyre axial direction of the second shallow bottom portion 22 is 0.20 times or more and 0.30 times or less the width (W3) (shown in Fig. 2) in the tyre axial direction of the second land region 9, for example. The length (L6) of the second shallow bottom portion 22 in this embodiment is smaller than the length (L2) in the tyre axial direction of the first shallow bottom portion 21 (shown in Fig. 3) of each of the first sipes 16.

The second shallow bottom portion 22 includes a constant depth portion (22a) extending at a constant depth in a longitudinal direction of a respective one of the second sipes 17 and a side surface (22b) connected with a bottom surface of the constant depth portion (22a) and inclined with respect to the tyre radial direction. An angle θ5 with respect to the tyre radial direction of the side surface (22b) of the second shallow bottom portion 22 is 5 degrees or more and 15 degrees or less, for example. In an preferred embodiment, the angle θ5 of the side surface (22b) of the second shallow bottom portion 22 is smaller than the angle θ2 (shown in Fig. 3) with respect to the tyre radial direction of the side surface 24 of each of the varying depth portions (21b) of the first shallow bottom portion 21. In the second shallow bottom portion 22 configured as such, the length in the tyre axial direction can be made small, therefore, it is possible that the wet performance is suppressed from being impaired.

A difference between a maximum depth (d3) of each of the second sipes 17 and a depth (d4) of the constant depth portion (22a) of the respective second shallow bottom portion 22 is at least 0.5 mm or more. It is preferred that the depth (d4) of the constant depth portion (22a) of the second shallow bottom portion 22 is 0.50 times or less the maximum depth (d3) of each of the second sipes 17. Specifically, the depth (d4) of the constant depth portion (22a) of the second shallow bottom portion 22 is 0.20 times or more and 0.30 times or less the maximum depth (d3) of each of the second sipes 17. The second shallow bottom portions 22 configured as such improve the steering stability on a dry road surface and the wet performance in a good balance.

As shown in Fig. 2, it is preferred that each of the third sipes 18 does not overlap with a virtual area obtained by extending, in the tyre axial direction, the end portion (16a) on a side of the second land region 9 of any of the first sipes 16. Further, it is preferred that each of the third sipes 18 does not overlap with a virtual area obtained by extending, in the tyre axial direction, the end portion (17b) on the side of the second vertical edge (9b) of any of the second sipes 17. In a more preferred embodiment, each of the third sipes 18 does not overlap with a virtual area obtained by extending, in the tyre axial direction, the entire body of any of the first sipes 16 nor a virtual area obtained by extending, in the tyre axial direction, the entire body of any of the second sipes 17, for example. Such an arrangement of the third sipes 18 is helpful for suppressing the uneven wear of the first land region 8 and the second land region 9. Further, such an arrangement of the sipes can make the impact sound generated by the sipes white noise, therefore, they are helpful for improving the noise performance.

A length (L7) of each of the third sipes 18 in the tyre axial direction is 0.40 times or more and 0.60 times or less the width (W3) of the second land region 9 in the tyre axial direction, for example.

The third sipes 18 may be curved or partially bent, for example. Each of the third sipes 18 in this embodiment has a bent portion 31, for example. A distance (L8) in the tyre axial direction between the second vertical edge (9b) and the bent portion 31 of each of the third sipes 18 is 0.40 times or more and 0.60 times or less the length (L7) in the tyre axial direction of each of the third sipes 18, for example. The third sipes 18 configured as such provide frictional force in multiple directions by the edges thereof, therefore, they are helpful for improving the traction and the cornering performance during running on a wet road surface.

Each of the third sipes 18 includes a gently inclined portion 32 inclined with respect to the tyre axial direction and a steeply inclined portion 33 inclined with respect to the tyre axial direction at a larger angle than the gently inclined portion 32. The gently inclined portion 32 is connected with the second vertical edge (9b). An angle θ6 of the gently inclined portion 32 with respect to the tyre axial direction is 5 degrees or more and 15 degrees or less, for example. The steeply inclined portion 33 includes an end portion (18b) on the side of the first vertical edge (9a) of a respective one of the third sipes 18. An angle θ7 of the steeply inclined portion 33 with respect to the tyre axial direction is 40 degrees or more and 50 degrees or less, for example. It is preferred that each of the gently inclined portions 32 and the steeply inclined portions 33 extends linearly. In this embodiment, the gently inclined portions 32 of the third sipes 18 are arranged in parallel with the gently inclined portions 27 of the second sipes 17. Further, the steeply inclined portions 33 of the third sipes 18 are arranged in parallel with the steeply inclined portions 28 of the second sipes 17.

In a more preferred embodiment, the angle θ6 of the gently inclined portion 32 of each of the third sipes 18 is smaller than the angle θ1 of each of the first sipes 16 with respect to the tyre axial direction. The angle θ7 of the steeply inclined portion 33 of each of the third sipes 18 is smaller than the angle θ1 of each of the first sipes 16. Thereby, the impact sound generated when the edges of the first sipes 16 and the edges of the third sipes 18 come into contact with ground is turned into white noise, therefore, the noise performance is improved.

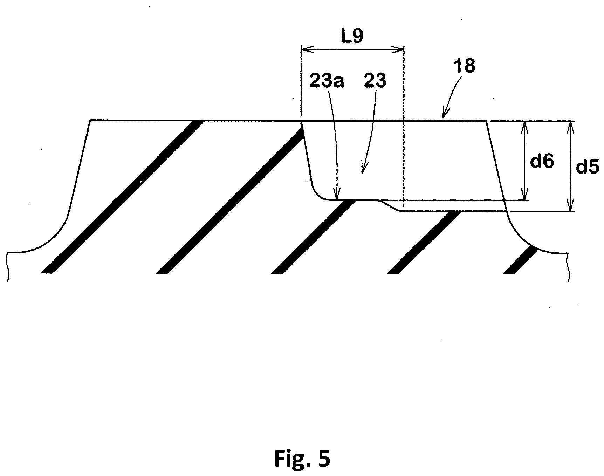

Fig. 5 is a cross-sectional view of one of the third sipes 18 taken along C-C line of Fig. 2. As shown in Fig. 5, each of the third sipes 18 includes a third shallow bottom portion 23 formed by raising a bottom surface of the respective third sipe. The third shallow bottom portion 23 in this embodiment includes the end portion (18b) (shown in Fig. 2) on the side of the first vertical edge (9a) of the respective third sipe 18. The third sipes 18 configured as such maintain the rigidity of the second land region 9, therefore, the steering stability on a dry road surface is ensured.

It is preferred that the third shallow bottom portion 23 is provided in the steeply inclined portion 33 of each of the third sipes 18. Thereby, the rigidity in the tyre axial direction of the second land region 9 is effectively maintained.

A length (L9) in the tyre axial direction of the third shallow bottom portion 23 is 0.20 times or more and 0.30 times or less the width (W3) (shown in Fig. 2) in the tyre axial direction of the second land region 9, for example. The length (L9) of the third shallow bottom portion 23 in this embodiment is smaller than the length (L2) in the tyre axial direction of the first shallow bottom portion 21 (shown in Fig. 3) of each of the first sipes 16.

The third shallow bottom portion 23 includes a constant depth portion (23a) extending in a longitudinal direction of the respective third sipe 18 at a constant depth. A difference between a maximum depth (d5) of each of the third sipes 18 and a depth (d6) of the constant depth portion (23a) of the respective third shallow bottom portion 23 is at least 0.5 mm or more. It is preferred that the depth (d6) of the constant depth portion (23a) of the third shallow bottom portion 23 is 0.50 times or more the maximum depth (d5) of each of the third sipes 18. Specifically, the depth (d6) of the constant depth portion (23a) of the third shallow bottom portion 23 is 0.80 times or more and 0.95 times or less the maximum depth (d5) of each of the third sipes 18. Thereby, the third sipes 18 can exert excellent wet performance.

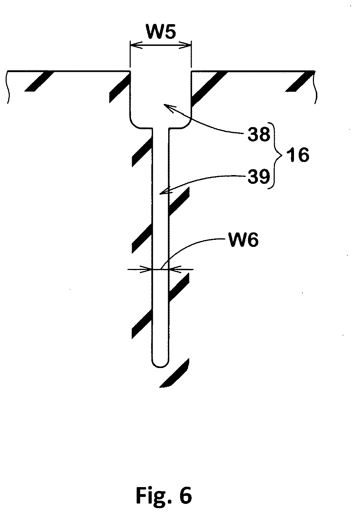

Fig. 6 is a cross-sectional view of one of the first sipes 16 taken along D-D line of Fig. 2 as a diagram showing a cross-sectional view of each of the sipes. As shown in Fig. 6, each of the sipes in this embodiment includes an opening portion 38 and a narrow portion 39 connected with the opening portion 38 on an inner side thereof in the tyre radial direction. A width (W5) of the opening portion 38 is 1.0 mm or more and 2.0 mm or less, for example. A width (W6) of the narrow portion 39 is 0.3 mm or more and 0.8 mm or less, for example. The sipes configured as such are helpful for improving the steering stability on a dry road surface and the wet performance in a good balance.

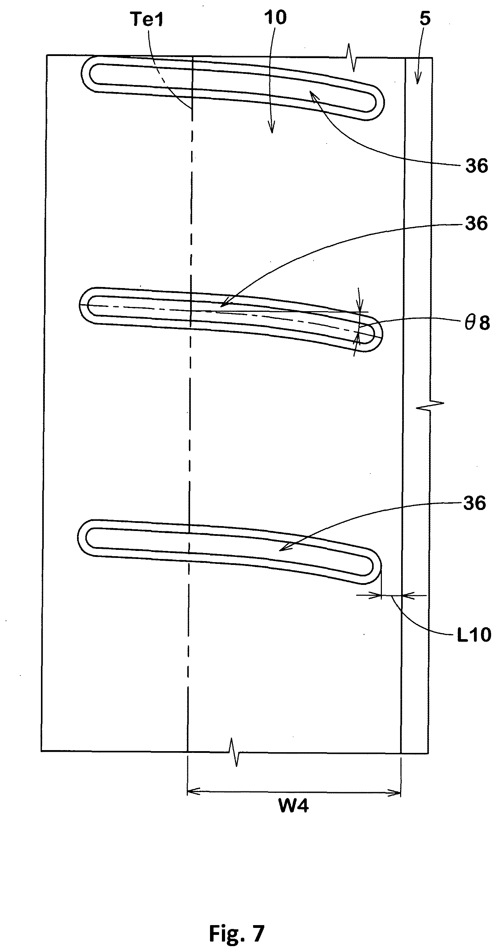

Fig. 7 is an enlarged view of the third land region 10. As shown in Fig. 7, the third land region 10 is provided with a plurality of first lateral grooves 36 each extending from the first tread edge (Te1) in the tyre axial direction to terminate before reaching the first shoulder main groove 5. The first lateral grooves 36 configured as such exert an excellent drainage property while maintaining the rigidity of the third land region 10.

A distance (L10) in the tyre axial direction between each of the first lateral grooves 36 and the first shoulder main groove 5 is 0.05 times or more and 0.15 times or less a width (W4) in the tyre axial direction of the third land region 10, for example. In a more preferred embodiment, the distance (L10) is smaller than the length (L4) in the tyre axial direction of each of the second sipes 17 and the length (L7) (shown in Fig. 2 and the same applies hereinafter) in the tyre axial direction of each of the third sipes 18. Thereby, the third land region 10 is suppressed from excessively increasing in the rigidity.

The first lateral grooves 36 are inclined in a direction opposite to the first sipes 16 with respect to the tyre axial direction, for example. An angle θ8 of each of the first lateral grooves 36 with respect to the tyre axial direction is 5 degrees or more and 15 degrees or less, for example. It is preferred that an angle θ8 with respect to the tyre axial direction of each of the first lateral grooves 36 is smaller than the angle θ1 with respect to the tyre axial direction of each of the first sipes 16. The first lateral grooves 36 configured as such are helpful for increasing the traction on a wet road surface.

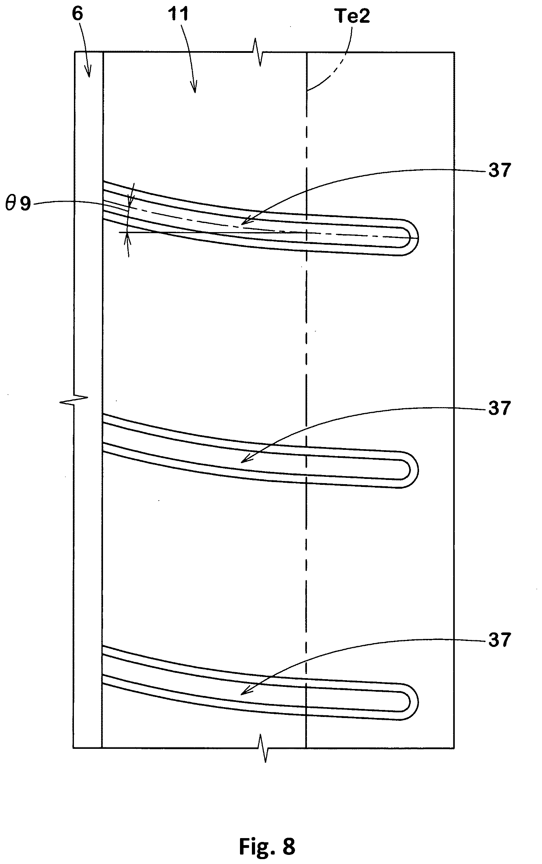

Fig. 8 is an enlarged view of the fourth land region 11. As shown in Fig. 8, the fourth land region 11 is provided with a plurality of second lateral grooves 37 each extending from the second tread edge (Te2) in the tyre axial direction to be connected with the second shoulder main groove 6. The second lateral grooves 37 configured as such are helpful for improving the wet performance.

The second lateral grooves 37 are inclined in a direction opposite to the second sipes 17 and the third sipes 18 with respect to the tyre axial direction, for example. An angle θ9 of each of the second lateral grooves 37 with respect to the tyre axial direction is 5 degrees or more and 15 degrees or less, for example. It is preferred that the angle θ9 with respect to the tyre axial direction of each of the second lateral grooves 37 is smaller than the angle θ4 with respect to the tyre axial direction of each of the steeply inclined portions 28 and the angle θ7 with respect to the tyre axial direction of each of the steeply inclined portion 33.

while detailed description has been made of the tyre as an embodiment of the present invention, the present invention can be embodied in various forms without being limited to the illustrated embodiment but to the appended claims.

### Working Example (Example)

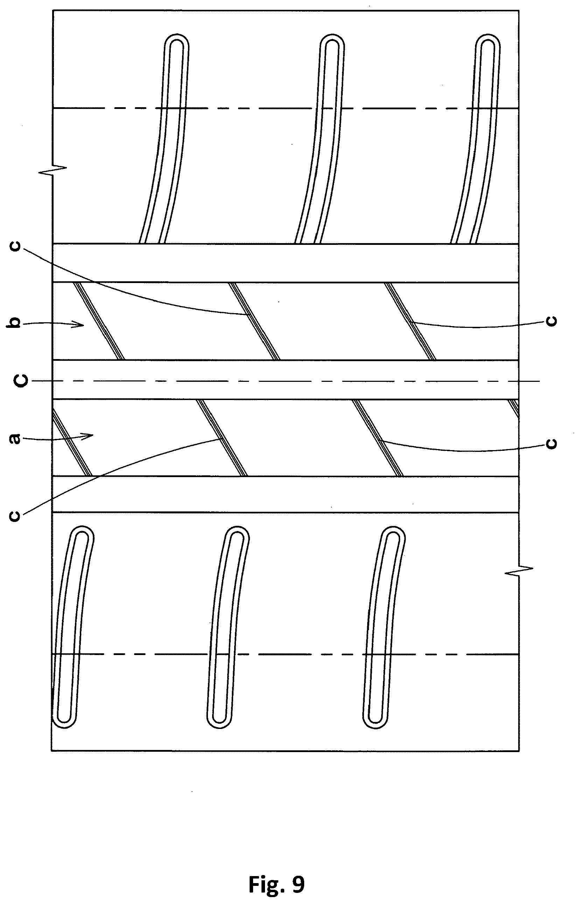

Tyres of size 195/65R15 having the basic pattern shown in Fig. 1 were made by way of test according to the specifications listed in Table 1. As Reference, tyres as shown in Fig. 9 were made by way of test. As shown in Fig. 9, each of the tyres of the Reference includes a first land region (a), a second land region (b), and sipes (c). The sipes (c) are provided in each of the first land region (a) and the second land region (b). Each of the sipes (c) extends so as to cross the respective land region. Note that each of the sipes (c) has the same cross-sectional shape as each of the first sipes described above. The tyres as the Reference were substantially the same as the tyre shown in Fig. 1 except for the configuration described above. Each of the test tyres was tested for the steering stability on a dry road surface and the wet performance. Common specifications of the test tyres and the test methods were as follows.
Tyre rim: 15x6.0J
Tyre inner pressure: 230 kPa
Test vehicle: front wheel drive car, displacement of 1600 cc
Tyre mounting position: all wheels
The test methods were as follows.

### < steering stability on dry road surface >

while a test driver drove the test vehicle on a dry road surface, the steering stability was evaluated by the driver's feeling. The test results are indicated by an evaluation point based on the Reference being 100 wherein the larger the numerical value, the better the steering stability is.

### < Wet performance >

while the test driver drove the test vehicle on a wet road surface, running performance was evaluated by the driver's feeling.

The test results are indicated by an evaluation point based on the Reference being 100 wherein the larger the numerical value, the better the wet performance is.

The test results are shown in Table 1.

**Table 1.**

| | Ref. | Ex.1 | Ex.2 | Ex.3 | Ex.4 | Ex.5 | Ex.6 | Ex.7 | Ex.8 | Ex.9 |
|---|---|---|---|---|---|---|---|---|---|---|
| Figure showing Tread pattern | Fig.9 | Fig.1 | Fig.1 | Fig.1 | Fig.1 | Fig.1 | Fig.1 | Fig.1 | Fig.1 | Fig.1 |
| Length (L2) of First shallow bottom portion/ Width (W2) of First land region | 0.65 | 0.65 | 0.55 | 0.60 | 0.70 | 0.75 | 0.65 | 0.65 | 0.65 | 0.65 |
| Length (L4) of Second sipe/ Width (W3) of Second land region | - | 0.50 | 0.50 | 0.50 | 0.50 | 0.50 | 0.40 | 0.45 | 0.55 | 0.60 |
| Length (L7) of Third sipe/ Width (W3) of Second land region | - | 0.50 | 0.50 | 0.50 | 0.50 | 0.50 | 0.40 | 0.45 | 0.55 | 0.60 |
| Steering stability on dry road surface [evaluation point] | 100 | 105 | 103 | 104 | 105 | 105 | 105 | 105 | 104 | 102 |
| Wet performance [evaluation point] | 100 | 102 | 103 | 102 | 102 | 101 | 101 | 102 | 103 | 104 |

From the test results, it was confirmed that the steering stability on a dry road surface and the wet performance were improved in the tyres as Examples.

### Description of the Reference signs

- 2: tread portion
- 3: main groove
- 8: first land region
- 9: second land region
- 9a: first vertical edge
- 9b: second vertical edge
- 16: first sipe
- 17: second sipe
- 18: third sipe
- 21: first shallow bottom portion

## Claims

1. A tyre (1) comprising a tread portion (2) whose position when mounted on a vehicle is specified, wherein
the tread portion (2) includes a plurality of main grooves (3) extending continuously in a tyre circumferential direction, and land regions (4) divided by the main grooves (3), the land regions (4) including a first land region (8) and a second land region (9) positioned adjacently to the first land region (8), when the tyre is mounted on a vehicle, on an inner side of the vehicle,
the first land region (8) is provided with a plurality of first sipes (16) each crossing the first land region (8),
the second land region (9) includes a first vertical edge (9a) positioned on a side of the first land region (8), a second vertical edge (9b) positioned on a side opposite to the first vertical edge (9a), and a ground contacting surface defined between the first vertical edge (9a) and the second vertical edge (9b),
the second land region (9) is provided with a plurality of second sipes (17) each extending from the first vertical edge (9a) to terminate without reaching the second vertical edge (9b), and a plurality of third sipes (18) each extending from the second vertical edge (9b) to terminate without reaching the first vertical edge (9a), and
each of the first sipes (16) includes a first shallow bottom portion (21) formed by raising a bottom surface thereof at a center portion thereof in a tyre axial direction,
the first sipes (16), the second sipes (17), and the third sipes (18) are inclined in the same direction with respect to the tyre axial direction,
**characterized in that**
each of the second sipes (17) includes a gently inclined portion (27) inclined at an angle smaller (θ3) than each of the first sipes (16) with respect to the tyre axial direction and a steeply inclined portion (28) inclined at an angle (θ4) larger than each of the first sipes (16) with respect to the tyre axial direction.

2. The tyre (1) according to claim 1, wherein
The number of the main grooves (3) is three and the tread portion (2) comprises four land regions (4) divided by the three main grooves (3), and
the first land region (8) and the second land region (9) are sandwiched between the other two land regions.

3. The tyre (1) according to claim 1 or 2, wherein
each of the first sipes (16) extends linearly and obliquely with respect to the tyre axial direction.

4. The tyre (1) according to any one of claims 1 to 3, wherein
each of the second sipes (17) includes a second shallow bottom portion (22) formed by raising a bottom surface thereof.

5. The tyre (1) according to claim 4, wherein
the second shallow bottom portion (22) is provided at a position including an end portion (17b) on a side of the second vertical edge (9b) of a respective one of the second sipes (17).

6. The tyre (1) according to claim 5, wherein
the second shallow bottom portion (22) includes a constant depth portion (22a) extending in a longitudinal direction of a respective one of the second sipes (17) at a constant depth.

7. The tyre (1) according to claim 6, wherein
a difference between the depth (d4) of the constant depth portion (22a) of the second shallow bottom portion (22) and a maximum depth (d3) of a respective one of the second sipes (17) is 0.5 mm or more.

8. The tyre (1) according to any one of claims 1 to 7, wherein
each of the third sipes (18) includes a third shallow bottom portion (23) formed by raising a bottom surface thereof.

9. The tyre (1) according to claim 8, wherein
the third shallow bottom portion (23) is provided at a position including an end portion (18b) on a side of the first vertical edge (9a) of a respective one of the third sipes (18).

10. The tyre (1) according to claim 9, wherein
The third shallow bottom portion (23) includes a constant depth portion (23a) extending in a longitudinal direction of a respective one of the third sipes (18) at a constant depth.

11. The tyre (1) according to claim 10, wherein
a difference between the depth (d6) of the constant depth portion (23a) of the third shallow bottom portion (23) and a maximum depth (d5) of a respective one of the third sipes (18) is 0.5 mm or more.

12. The tyre (1) according to any one of claims 1 to 11, wherein
each of the third sipes (18) includes a gently inclined portion (32) inclined at an angle (θ6) smaller than each of the first sipes (16) with respect to the tyre axial direction and a steeply inclined portion (33) inclined at an angle (θ7) larger than each of the first sipes (16) with respect to the tyre axial direction.

13. The tyre (1) according to any one of claims 1 to 12, wherein
each of the second sipes (17) includes a second shallow bottom portion (22) formed by raising a bottom surface thereof, and
the second shallow bottom portion (22) is provided at the steeply inclined portion (28) thereof.

## Patentansprüche

1. Reifen (1) mit einem Laufflächenabschnitt (2), dessen Position bei der Montage an einem Fahrzeug festgelegt ist, wobei
der Laufflächenabschnitt (2) eine Vielzahl von Hauptrillen (3), die sich kontinuierlich in einer Reifenumfangsrichtung erstrecken, und Landbereiche (4) aufweist, die durch die Hauptrillen (3) unterteilt sind, wobei die Landbereiche (4) einen ersten Landbereich (8) und einen zweiten Landbereich (9) umfassen, der benachbart zu dem ersten Landbereich (8) auf einer Innenseite des Fahrzeugs angeordnet ist, wenn der Reifen an einem Fahrzeug montiert ist,
der erste Landbereich (8) mit einer Vielzahl von ersten Feinschnitten (16) versehen ist, die jeweils den ersten Landbereich (8) kreuzen,
der zweite Landbereich (9) eine erste vertikale Kante (9a), die auf einer Seite des ersten Landbereichs (8) positioniert ist, eine zweite vertikale Kante (9b), die auf einer der ersten vertikalen Kante (9a) gegenüberliegenden Seite positioniert ist, und eine Bodenkontaktfläche umfasst, die zwischen der ersten vertikalen Kante (9a) und der zweiten vertikalen Kante (9b) definiert ist,
der zweite Landbereich (9) mit einer Vielzahl von zweiten Feinschnitten (17) versehen ist, die sich jeweils von der ersten vertikalen Kante (9a) aus erstrecken und enden, ohne die zweite vertikale Kante (9b) zu erreichen, und mit einer Vielzahl von dritten Feinschnitten (18), die sich jeweils von der zweiten vertikalen Kante (9b) aus erstrecken und enden, ohne die erste vertikale Kante (9a) zu erreichen, und
ein jeder der ersten Feinschnitte (16) einen ersten flachen Grundabschnitt (21) aufweist, der durch Anheben einer Grundfläche desselben an einem Mittelabschnitt davon in einer axialen Richtung des Reifens gebildet ist,
die ersten Feinschnitte (16), die zweiten Feinschnitte (17) und die dritten Feinschnitte (18) in der gleichen Richtung in Bezug auf die axiale Richtung des Reifens geneigt sind,
**dadurch gekennzeichnet, dass**
ein jeder der zweiten Feinschnitte (17) einen sanft geneigten Abschnitt (27) aufweist, der unter einem kleineren Winkel (θ3) als ein jeder der ersten Feinschnitte (16) in Bezug auf die axiale Richtung des Reifens geneigt ist, und einen steil geneigten Abschnitt (28), der unter einem Winkel (θ4) größer als ein jeder der ersten Feinschnitte (16) in Bezug auf die axiale Richtung des Reifens geneigt ist.

2. Reifen (1) nach Anspruch 1, wobei
die Anzahl der Hauptrillen (3) drei beträgt und der Laufflächenabschnitt (2) vier Landbereiche (4) umfasst, die durch die drei Hauptrillen (3) abgeteilt sind, und
der erste Landbereich (8) und der zweite Landbereich (9) zwischen den beiden anderen Landbereichen eingebettet sind.

3. Reifen (1) nach Anspruch 1 oder 2, wobei sich ein jeder der ersten Feinschnitte (16) linear und schräg in Bezug auf die axiale Richtung des Reifens erstreckt.

4. Reifen (1) nach einem der Ansprüche 1 bis 3, wobei ein jeder der zweiten Feinschnitte (17) einen zweiten flachen Grundabschnitt (22) aufweist, der durch Anheben einer Grundfläche desselben gebildet ist.

5. Reifen (1) nach Anspruch 4, wobei der zweite flache Grundabschnitt (22) an einer Position vorgesehen ist, die einen Endabschnitt (17b) auf einer Seite der zweiten vertikalen Kante (9b) eines jeweiligen der zweiten Feinschnitte (17) einschließt.

6. Reifen (1) nach Anspruch 5, wobei der zweite flache Grundabschnitt (22) einen Abschnitt (22a) mit konstanter Tiefe umfasst, der sich in einer Längsrichtung eines jeweiligen der zweiten Feinschnitten (17) mit einer konstanten Tiefe erstreckt.

7. Reifen (1) nach Anspruch 6, wobei eine Differenz zwischen der Tiefe (d4) des Abschnitts (22a) mit konstanter Tiefe des zweiten flachen Grundabschnitts (22) und einer maximalen Tiefe (d3) einer jeweiligen der zweiten Feinschnitten (17) 0,5 mm oder mehr beträgt.

8. Reifen (1) nach einem der Ansprüche 1 bis 7, wobei ein jeder der dritten Feinschnitte (18) einen dritten flachen Grundabschnitt (23) aufweist, der durch Anheben einer Grundfläche desselben gebildet ist.

9. Reifen (1) nach Anspruch 8, wobei der dritte flache Grundabschnitt (23) an einer Position vorgesehen ist, die einen Endabschnitt (18b) auf einer Seite der ersten vertikalen Kante (9a) eines jeweiligen der dritten Feinschnitte (18) einschließt.

10. Reifen (1) nach Anspruch 9, wobei der dritte flache Grundabschnitt (23) einen Abschnitt (23a) mit konstanter Tiefe aufweist, der sich in einer Längsrichtung eines jeweiligen der dritten Feinschnitte (18) mit einer konstanten Tiefe erstreckt.

11. Reifen (1) nach Anspruch 10, wobei eine Differenz zwischen der Tiefe (d6) des Abschnitts (23a) mit konstanter Tiefe des dritten flachen Grundabschnitts (23) und einer maximalen Tiefe (d5) eines jeweiligen der dritten Feinschnitte (18) 0,5 mm oder mehr beträgt.

12. Reifen (1) nach einem der Ansprüche 1 bis 11, wobei ein jeder der dritten Feinschnitte (18) einen sanft geneigten Abschnitt (32) aufweist, der unter einem Winkel (θ6) kleiner als ein jeder der ersten Feinschnitte (16) in Bezug auf die axiale Richtung des Reifens geneigt ist, und einen steil geneigten Abschnitt (33), der unter einem Winkel (θ7) größer als ein jeder der ersten Feinschnitte (16) in Bezug auf die axiale Richtung des Reifens geneigt ist,.

13. Reifen (1) nach einem der Ansprüche 1 bis 12, wobei
ein jeder der zweiten Feinschnitte (17) einen zweiten flachen Grundabschnitt (22) aufweist, der durch Anheben einer Grundfläche desselben gebildet ist, und
der zweite flache Grundabschnitt (22) an dem steil geneigten Abschnitt (28) desselben vorgesehen ist.

## Revendications

1. Pneumatique (1) comprenant une portion formant bande de roulement (2), dont la position, quand il est monté sur un véhicule, est spécifiée, dans lequel la portion formant bande de roulement (2) inclut une pluralité de rainures principales (3) s'étendant en continu dans une direction circonférentielle du pneumatique, et des régions en relief (4) divisées par les rainures principales (3), les régions en relief (4) incluant une première région en relief (8) et une deuxième région en relief (9) positionnée de manière adjacente à la première région en relief (8), quand le pneumatique est monté sur un véhicule, sur un côté intérieur du véhicule,
la première région en relief (8) est dotée d'une pluralité de premières fentes (16) croisant chacune la première région en relief (8),
la deuxième région en relief (9) inclut un premier bord vertical (9a) positionné sur un côté de la première région en relief (8), un second bord vertical (9b) positionné sur un côté opposé au premier bord vertical (9a), et une surface de contact au sol définie entre le premier bord vertical (9a) et le second bord vertical (9b),
la deuxième région en relief (9) est dotée d'une pluralité de deuxièmes fentes (17) s'étendant chacune depuis le premier bord vertical (9a) pour se terminer sans atteindre le second bord vertical (9b), et une pluralité de troisièmes fentes (18) s'étendant chacune depuis le second bord vertical (9b) pour se terminer sans atteindre le premier bord vertical (9a), et
chacune des premières fentes (16) inclut une première portion de fond peu profonde (21) formée en surélevant une surface de fond de celle-ci au niveau d'une portion centrale de celle-ci dans une direction axiale du pneumatique,
les premières fentes (16), les deuxièmes fentes (17) et les troisièmes fentes (18) sont inclinées dans la même direction par rapport à la direction axiale du pneumatique,
**caractérisé en ce que**
chacune des deuxièmes fentes (17) inclut une portion doucement inclinée (27) inclinée sous un angle plus petit (θ3) que chacune des premières fentes (16) par rapport à la direction axiale du pneumatique et une portion fortement inclinée (28) inclinée sous un angle (θ4) plus grand que chacune des premières portions (16) par rapport à la direction axiale du pneumatique.

2. Pneumatique (1) selon la revendication 1, dans lequel
le nombre de rainures principales (3) est de trois et la portions formant bande de roulement (2) comprend quatre régions en relief (4) divisées par les trois rainures principales (3), et
la première région en relief (8) et la deuxième région en relief (9) sont prises en sandwich entre les deux autres régions en relief.

3. Pneumatique (1) selon la revendication 1 ou 2, dans lequel
chacune des premières fentes (16) s'étend linéairement et en oblique par rapport à la direction axiale du pneumatique.

4. Pneumatique (1) selon l'une quelconque des revendications 1 à 3, dans lequel
chacune des deuxièmes fentes (17) inclut une deuxième portion de fond peu profonde (22) formée en surélevant une surface de fond de celle-ci.

5. Pneumatique (1) selon la revendication 4, dans lequel
la deuxième portion de fond peu profonde (22) est prévue à une position incluant une portion d'extrémité (17b) sur un côté du second bord vertical (9b) d'une fente respective parmi les deuxièmes fentes (17).

6. Pneumatique (1) selon la revendication 5, dans lequel
la deuxième portion de fond peu profonde (22) inclut une portion de profondeur constante (22a) s'étendant dans une direction longitudinale d'une fente respective parmi les deuxièmes fentes (17) à une profondeur constante.

7. Pneumatique (1) selon la revendication 6, dans lequel
une différence entre la profondeur (d4) de la portion de profondeur constante (22a) de la deuxième portion de fond peu profonde (22) et une profondeur maximum (d3) d'une fente respective parmi les deuxièmes fentes (17) est de 0,5 mm ou plus.

8. Pneumatique (1) selon l'une quelconque des revendications 1 à 7, dans lequel
chacune des troisièmes fentes (18) inclut une troisième portion de fond peu profonde (23) formée en surélevant une surface de fond de celle-ci.

9. Pneumatique (1) selon la revendication 8, dans lequel
la troisième portion de fond peu profonde (23) est prévue à une position incluant une portion d'extrémité (18b) sur un côté du premier bord vertical (9a) d'une fente respective parmi les troisièmes fentes (18).

10. Pneumatique (1) selon la revendication 9, dans lequel
la troisième portion de fond peu profonde (23) inclut une portion de profondeur constante (23a) s'étendant dans une direction longitudinale d'une fente respective parmi les troisièmes fentes (18) à une profondeur constante.

11. Pneumatique (1) selon la revendication 10, dans lequel
une différence entre la profondeur (d6) de la portion de profondeur constante (23a) de la troisième portion de fond peu profonde (23) et une profondeur maximum (d5) d'une fente respective parmi les troisièmes fentes (18) est de 0,5 mm ou plus.

12. Pneumatique (1) selon l'une quelconque des revendications 1 à 11, dans lequel
chacune des troisièmes fentes (18) inclut une portion doucement inclinée (32) inclinées sous un angle (θ6) plus petit que chacune des premières fentes (16) par rapport à la direction axiale du pneumatique et une portion fortement inclinée (33) inclinée sous un angle (θ7) plus grand que chacune des premières fentes (16) par rapport à la direction axiale du pneumatique.

13. Pneumatique (1) selon l'une quelconque des revendications 1 à 12, dans lequel
chacune des deuxièmes fentes (17) inclut une deuxième portion de fond peu profonde (22) formée en surélevant une surface de fond de celle-ci, et
la deuxième portion de fond peu profonde (22) est prévue au niveau de la portion fortement inclinée (28) de celle-ci.
